Europäisches Patentamt

European Patent Office

Office européen des brevets

(19)

(11) Veröffentlichungsnummer: **0 055 336**
**B1**

(12) # EUROPÄISCHE PATENTSCHRIFT

(45) Veröffentlichungstag der Patentschrift:
02.09.87

(21) Anmeldenummer: 81108002.7

(22) Anmeldetag: 06.10.81

(51) Int. Cl.⁴: **B 28 C 7/00,** B 28 C 5/16,
B 01 F 15/06, B 01 F 15/00,
F 27 B 9/18, F 26 B 3/22,
E 01 C 19/05

(54) **Vorrichtung zum Erhitzen pulverförmiger Produkte.**

(30) Priorität: 30.12.80 DE 3049520
16.01.81 DE 3101308

(43) Veröffentlichungstag der Anmeldung:
07.07.82 Patentblatt 82/27

(45) Bekanntmachung des Hinweises auf die Patenterteilung:
02.09.87 Patentblatt 87/36

(84) Benannte Vertragsstaaten:
AT BE CH DE FR GB IT LI LU NL SE

(56) Entgegenhaltungen:
DE-A-2 649 815
DE-A-2 946 658
FR-A-1 500 610
FR-A-2 426 493
FR-A-2 429 982
GB-A-975 998
US-A-1 822 486
US-A-4 113 836

(73) Patentinhaber: LINNHOFF + THESENFITZ
MASCHINENBAU GMBH, Gutenbergstrasse 28/30,
D-2090 Winsen (Luhe) (DE)

(72) Erfinder: Thesenfitz, Klaus, Dipl.- Kaufm.,
Gutenbergstrasse 28/30, D-2090 Winsen (Luhe)
(DE)

(74) Vertreter: Walter, Helmut, Aubingerstrasse 81,
D-8000 München 60 (DE)

EP 0 055 336 B1

## Beschreibung

Die Erfindung bezieht sich allgemein auf eine Vorrichtung zum Erhitzen von pulverförmigen Produkten. Ein bevorzugter Anwendungsfall der erfindungsgemäßen Vorrichtung ist das Erhitzen von pulverförmigem Gesteinsmehl auf etwa 180° C.

Mehr speziell bezieht sich die Erfindung auf eine Vorrichtung zum Erhitzen pulverförmiger Produkte mit einem zylindrischen Kessel mit vertikaler Längsachse, einem Rührwerk und einer dem Kessel zugeordneten Heizung, wobei ein Rührwerk zur Anwendung kommt, das über die Innenseite des Kesselinnenbodens streifende Rührwerkplatten aufweist, die an zwei um 180° gegeneinander versetzten Armen derart radial versetzt angeordnet sind, daß im wesentlichen alle Bereiche des Kesselinnenbodens der Einwirkung zumindest einer der Rührwerkplatten ausgestezt sind und bei dem die Arme am unteren Ende einer Welle befestigt sind, deren Lageruung und Antrieb in einem domartigen Aufsatz des Kesseldeckels angeordnet sind. Damit geht die Erfindung von einer Vorrichtung gemäß der DE-AS 26 49 815 aus, obwohl diese bekannte Vorrichtung auf einem wesentlich anderen Gebiet mit wesentlich anderen Kriterien als die vorliegende Erfindung liegt, indem sich die bekannte Lösung auf das Kochen plastischer Massen, insbesondere Gußasphalt, bezieht, während es bei der vorliegenden Erfindung, um das Erwärmen von pulverförmigen Massen, wie Gesteinsmehl, geht.

In der US-A-4 113 836 ist zwar eine Vorrichtung beschrieben, die dem Kalzinieren von Gips dient und damit auf einem Gebiet liegt, das dem Gebiet, auf dem die vorliegende Erfindung liegt, entspricht; ein zufriedenstellendes Ergebnis wird aber dort mit einem relativ großen Aufwand angestrebt. Mittels eines punktförmig wirkenden Brenners wird die Atmosphäre in einer großvolumigen Brennkammer erwärmt, und in diese Brennkammer taucht der Kalzinierkessel in der Form eines hohen Zylinders ein.

Aufgabe der Erfindung ist es, eine gattungsgemäße Vorrichtung mit Kessel, Rührwerk und Heizung so auszugestalten, daß das zu erwärmende Produkt bei möglichst kurzer Verweildauer im Kessel auf die gewünschte Endtemperatur gebracht wird und dabei das Produkt möglichst schonend auf eine gleichmäßige Endtemperatur gebracht wird.

Zur Lösung der gestellten Aufgabe weist die gattungsgemäße Vorrichtung erfindungsgemäß folgende Merkmale auf:

1.1 der Kessel ist eine flache Trommel, deren Durchmesser/Höhen-Verhältnis im Bereich von etwa 2:1 bis 3:1 liegt;

1.2 die Kesselwand, der Kesseldeckel und der Kesselboden sind wärmeisolierend derart ausgebildet, daß zwischen einem wärmeisolierenden Kesselaußenboden und einem wärmedurchlässigen Kesselinnenboden eine Heizkammer besteht, in der ein Ringbrenner angeordnet ist und die sich in einer oben offenen Ringkammer zwischen einer wärmeisolierenden äußeren Kesselwand und einer wärmedurchlässigen inneren Kesselwand fortsetzt.

Bei der Erfindung wird das Gut unter ständigem Umrühren auf die gewünschte Endtemperatur gebracht, so daß einerseits das Gut sehr gleichmäßig erwärmt wird, andererseits das Gut weitgehend geschont wird, d.h. insbesondere eine Überhitzung in einigen Teilen und eine nicht ausreichende Erwärmung in anderen Teilen vermieden wird und demzufolge wiederum die Endtemperatur in relativ kurzer Zeit erreicht werden kann. Die Ausbildung des Rührwerkes als fliegend gelagerte Welle mit Rührarmen am unteren Ende ermöglicht eine optimale Umwälzcharakteristik für das Gut und die Möglichkeit des einfachen Ein- und Ausbaues des Rührwerkes, so daß die Pflege und Wartung der Vorrichtung erleichtert werden und die Vorrichtung demzufolge auch regelmäßig gepflegt und gewartet wird, was ebenfalls optimalen Arbeitsbedingungen zugute kommt.

Die erfindungsgemäße Bemessung des Kessels, dessen weitestgehende Isolierung und die erfindungsgemäße Anordnung und Ausbildung der Heizung schaffen eine kompakte Baugruppe, in der die initierte Wärme gut zusammengehalten wird, was der Erwärmung des Produktes und der Energiebilanz zugute kommt.

Die Unteransprüche weisen Merkmale auf, die für die Realisierung in der Praxis ihre besondere Bedeutung haben.

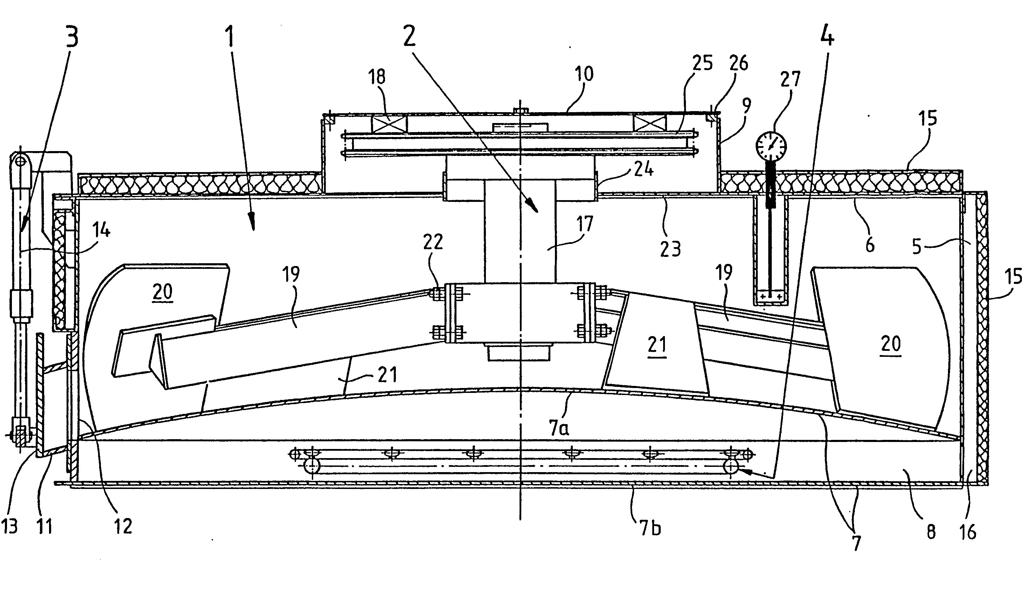

Ein Ausführungsbeispiel der Erfindung ist in der Zeichnung dargestellt und nachfolgend erläutert.

Die Hauptbaugruppen der erfindungsgemäßen Vorrichtung sind der Kessel 1, das Rührwerk 2, die Entleervorrichtung 3 und die Heizung 4. Der Kessel 1 besteht aus der zylindrischen vertikalen Seitenwand 5 aus wärmeleitendem Material, dem Deckel 6 und dem Boden 7. Der Boden ist doppelwandig ausgeführt, indem ein nach dem Kesselinneren gewölbter Innenboden 7a und der ebene äußere Isolierboden 7b zwischen sich und dem unteren Seitenwandteil eine Kammer 8 zur Aufnahme der Heizung 4 bilden. In den Kesseldeckel 6 ist zentrisch ein nach außen ragendes Gehäuse 9 aufgesetzt, das seinerseits von einem lösbaren Deckel 10 verschlossen ist. Der Entleerung des Kessels dient eine zu einem etwa horizontalen Rohrstück 11 erweiterte Öffnung 12 im unteren Bereich der Kesselseitenwand 5. Die Öffnung 12 ist mit einem Schieber 13 verschließbar und freizugeben, der mit dem Außenende des Rohrstückes 11 zusammenwirkt und mit einem Hydraulikzylinder 14 verstellbar ist. Eine andere Verschlußausbildung, auch dessen Ausbildung als Automatikverschluß, sind möglich. Kesseldeckel 6 und äußere Kesselseitenwand sind weitestgehend mit Wärmedämmplatten 15 belegt, wobei zwischen der wärmeleitenden Seitenwand 5 und den ihr zugeordneten Isolierplatten eine Ringkammer 16 gebildet ist, die unten mit der Brennerkammer 8 verbunden ist und oben, beispielsweise durch Auslaßöffnungen offen ist, so daß die von der Heizung 4 erzeugte Wärmeenergie nicht nur den Bodenteil 7a sondern auch die Seitenwand 5 beheizt.

Die Heizung 4 in der Kammer 8 ist ein ringförmiger Brenner beliebiger Bauweise, beispielsweise ein Gasbrenner, dem Gas und Luft durch Rohre zugeführt werden, die durch die Ringkammer 16 hindurchgeführt sind. Die Einfüllung des zu behandelnden Gutes sollte insbesondere von oben erfolgen, beispielsweise mit einem den Deckel 6 durchsetzenden Aufgabetrichter. Der Durchmesser des Kessels sollte etwa doppelt bis dreimal so groß wie dessen Höhe sein, um dem Produkt eine möglichst große beheizte Fläche zu bieten.

Das Rührwerk 2 weist eine vertikale Welle 17 auf, die in einem Ringlager 18 drehbar am Deckel 10 des Gehäuses 9 aufgehängt ist. Die Welle trägt an ihrem unteren Ende zwei um 180° gegeneinander versetzte radiale Arme 19, von denen jeder am äußeren Ende nahe der Kesselseitenwand 5 eine Mischplatte 20 und in unterschiedlichen Bereichen zwischen der Mischplatte 20 und der Welle 17 einen Bodenschaber 21 trägt, so daß die beiden Bodenschaber zusammen weitgehend den Bodenteil 7a überstreichen. Die Arme 19 sind mit Schraubverbindungen 22 lösbar mit der Welle 17 verbunden. Im Bereich des Kesseldeckels 6 sind der Innenraum des Gehäuses 9 und der Innenraum des Kessels 1 durch eine horizontale Trennwand 23 voneinander getrennt. In einem Lager 24 der Trennwand 23 ist die Welle 17 drehbar aber im übrigen so durch die Trennwand hindurchgeführt, daß das zu behandelnde Gut nicht in das Gehäuse 9 gelangt. In dem Gehäuse ist unmittelbar unter dem oberen Ende der Welle 17 der der Welle 17 zugeordnete Teil des Rührwerksantriebes gelagert. Im Beispiel handelt es sich um ein von außen her angetriebenes Kettenrad 25. Auf dem Gehäuse 9 ist sein Deckel 10 mit einem Flansch 26 aufgesetzt, der gleichzeitig als Dichtung dient.

Mit einem Anzeigegerät 27 ist die Temperatur und gegebenenfalls der Druck im Inneren des Kessels 1 anzeigbar.

Die Korngröße des pulverförmigen Gutes ist ohne wesentliche Bedeutung. Es kann die Form eines Mehles oder eines Granulates haben.

### Patentansprüche

1. Vorrichtung zum Erhitzen pulverförmiger Produkte mit einem zylindrischen Kessel (1) mit vertikaler Längsachse, einem Rührwerk (2) und einer dem Kessel zugeordneten Heizung (4), wobei ein Rührwerk zur Anwendung kommt, das über die Innenseite des Kesselinnenbodens (7a) streifende Rührwerkplatten aufweist, die an zwei um 180° gegeneinander versetzten Armen (19) derart radial versetzt angeordnet sind, daß im wesentlichen alle Bereiche des Kesselinnenbodens der Einwirkung zumindest einer der Rührwerkplatten ausgesetzt sind und bei dem die Arme am unteren Ende einer Welle (17) befestigt sind, deren Lagerung und Antrieb in einem domartigen Aufsatz des Kesseldeckels angeordnet sind, gekennzeichnet durch die folgenden Merkmale:

1.1 der Kessel (1) ist eine flache Trommel, deren Durchmesser/Höhen-Verhältnis im Bereich von etwa 2:1 bis 3:1 liegt;

1.2 die Kesselwand (5), der Kesseldeckel (6) und der Kesselboden (7) sind wärmeisolierend derart ausgebildet, daß zwischen einem wärmeisolierenden Kesselaußenboden (7b) und einem wärmedurchlässigen Kesselinnenboden (7a) eine Heizkammer (8) besteht, in der ein Ringbrenner angeordnet ist und die sich in einer oben offenen Ringkammer (16) zwischen einer wärmeisolierenden äußeren Kesselwand und einer wärmedurchlässigen inneren Kesselwand fortsetzt.

2. Vorrichtung nach Anspruch 1, dadurch gekennzeichnet, daß der domartige Gehäuseaufbau (9) und der Innenraum des Kessels (1) durch eine Trennwand (23) voneinander getrennt sind, durch die die Welle (17) in einer die Drehbewegung der Welle gegenüber der Trennwand zulassenden Dichtung (Lager 24) hindurchgeführt ist, während der Deckel (10) des domartigen Aufbaues (9) mittels einer Dichtung (Flansch 26) auf der Seitenwand des domartigen Aufbaues aufgesetzt ist.

3. Vorrichtung nach Anspruch 1, dadurch gekennzeichnet, daß dem Ringbrenner die Verbrennungsenergie, vorzugsweise Brennstoff und Verbrennungsluft, durch die Ringkammer (16) zwischen wärmeisolierter Kesselaußenwand und wärmedurchlässiger Kesselinnenwand hindurch zugeführt wird.

4. Vorrichtung nach einem der Ansprüche 1 bis 3, gekennzeichnet durch eine obere Einfüllöffnung und eine untere Entnahmeöffnung (12) für das zu behandelnde Produkt.

5. Vorrichtung nach Anspruch 4, dadurch gekennzeichnet, daß die Entnahmeöffnung (12) sich im unteren Bereich der Kesselseitenwand (5) befindet und durch einen hydraulisch verstellbaren Schieber (13) verschließbar ist.

### Claims

1. Apparatus for heating pulverulent products, comprising a cylindrical vessel (1) with a vertical longitudinal axis, an agitator (2) and a heater (4) associated with the vessel, the agitator used comprising agitator plates which sweep over the inside of the inner base (7a) of the vessel and which are so disposed with radial offsetting on two arms (19) offset 180° from one another that substantially all the areas of the inner base of the vessel are exposed to the action of at least one of the agitator plates, the arms being secured to the bottom end of a shaft (17) whose bearings and drive are disposed in a dome-like superstructure on the vessel cover, characterised in the following features:

1.1 the vessel (1) is a flat drum, the diameter/height ratio of which is in the range from about 2: 1 to 3: 1;

1.2 the vessel wall (5), the vessel cover (6) and the vessel base (7) are thermally insulated in such a manner that a heating chamber (8) is formed between a thermally insulating outer base (7b) of the vessel and a thermally permeable inner base (7a) of the vessel, said heating chamber containing an annular burner and continuing in the form of an annular chamber (16) open at the top between a thermally insulating outer vessel wall and a thermally permeable inner vessel wall.

2. Apparatus according to claim 1, characterised in that the housing superstructure dome (9) and the interior of the vessel (1) are separated from one another by a partition (23) through which the shaft (17) extends in a seal (bearing 24) which allows rotary movement of the shaft relatively to the partition, while the cover (10) of the superstructure dome (9) is fitted on the side wall of the superstructure dome by means of a seal (flange 26).

3. Apparatus according to claim 1, characterised in that the combustion energy, preferably fuel and air for combustion, is fed to the annular burner through the annular chamber (16) between the thermally insulated outer wall of the vessel and the thermally permeable inner wall of the vessel.

4. Apparatus according to any one of claims 1 to 3, characterised by a top filler aperture and a bottom withdrawal aperture (12) for the product under treatment.

5. Apparatus according to claim 4, characterised in that the withdrawal aperture (12) is situated in the bottom area of the vessel side wall (5) and is closable by a hydraulically adjustable slide (13).

## Revendications

1. Dispositif de chauffage de produits pulvérulents, avec un récipient cylindrique (1) à axe vertical, un mécanisme agitateur (2) et un organe de chauffage (4) associé au récipient, le mécanisme agitateur utilisé comportant des plaques agitatrices raclant la paroi intérieure du fond intérieur (7a) du récipient, ces plaques étant disposées sur deux bras (19) décalés entre eux de 180°, avec un décalage radial tel que toutes les zones du fond intérieur du récipient soient essentiellement soumises à l'action d'au moins l'une des plaques agitatrices, les bras étant fixés à l'extrémité inférieure d'un arbre (17) dont le montage et la commande sont disposés dans une protubérance en forme de dôme du couvercle du récipient, caractérisé par les caractéristiques suivantes:

1.1 le récipient (1) est un tambour plat dont le rapport diamètre/hauteur est approximativement compris entre 2:1 et 3:1;

1.2 la paroi (5) du récipient, le couvercle (6) du récipient et le fond (7) du récipient sont réalisés avec un calorifugeage, de façon qu'une chambre de chauffe (8) soit formée entre un fond extérieur calorifugé (7b) du récipient et un fond intérieur (7a) du récipient laissant passer la chaleur, chambre dans laquelle est disposé un brûleur annulaire et qui se prolonge par une chambre annulaire (16) ouverte en haut et formée entre une paroi extérieure calorifugée du récipient et une paroi intérieure du récipient laissant passer la chaleur.

2. Dispositif selon la revendication 1, caractérisé en ce que la protubérance de l'enveloppe en forme de dôme (9) et le volume intérieur du récipient (1) sont séparés l'un de l'autre par une cloison (23) à travers laquelle l'arbre (17) est guidé dans un organe d'étanchéité (palier 24) permettant le mouvement de rotation de l'arbre par rapport à la cloison, tandis que le couvercle (10) de la protubérance en forme de dôme (9) repose au moyen d'un élément d'étanchéité (collerette 26) sur la paroi latérale de la protubérance en forme de dôme.

3. Dispositif selon la revendication 1, caractérisé en ce que l'énergie de combustion, comprenant de préférence du combustible et de l'air de combustion, est amenée au brûleur annulaire par la chambre annulaire (16) formée entre la paroi extérieure calorifugée (16) du récipient et la paroi intérieure du récipient laissant passer la chaleur.

4. Dispositif selon l'une des revendications 1 à 3, caractérisé par une ouverture de remplissage supérieure et une ouverture de prélèvement inférieure (12) du produit à traiter.

5. Dispositif selon la revendication 4, caractérisé en ce que l'ouverture de prélèvement (12) se trouve dans la partie inférieure de la paroi latérale (5) du récipient et peut être fermée par un tiroir (13) à commande hydraulique.

0 055 336